(19)

Europäisches
Patentamt
European
Patent Office
Office européen
des brevets

(11) **EP 4 611 240 A1**

(12) **EUROPEAN PATENT APPLICATION**

published in accordance with Art. 153(4) EPC

(43) Date of publication:
**03.09.2025 Bulletin 2025/36**

(21) Application number: **24759699.2**

(22) Date of filing: **21.02.2024**

(51) International Patent Classification (IPC):
*H02M 1/088* (2006.01)    *B60L 15/20* (2006.01)
*H02M 3/158* (2006.01)    *H02P 6/08* (2016.01)

(52) Cooperative Patent Classification (CPC):
Y02T 10/72

(86) International application number:
**PCT/CN2024/077908**

(87) International publication number:
**WO 2024/175022 (29.08.2024 Gazette 2024/35)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **21.02.2023 CN 202310141754**

(71) Applicants:
• **Zhejiang Geely Holding Group Co., Ltd.
Hangzhou, Zhejiang 310051 (CN)**
• **Yiwu Geely Automatic Transmission Co., Ltd.
Yiwu Jinhua, Zhejiang 322003 (CN)**
• **Ningbo Geely Royal Engine Components Co.,
Ltd.
Ningbo City, Zhejiang 315336 (CN)**
• **Aurobay Technology Co., Ltd
Ningbo, Zhejiang 315800 (CN)**

(72) Inventors:
• **LIANG, Yilong
Hangzhou, Zhejiang 310051 (CN)**
• **ZHANG, Xiaozhen
Hangzhou, Zhejiang 310051 (CN)**
• **XIAO, Yu
Hangzhou, Zhejiang 310051 (CN)**
• **YU, Yue
Hangzhou, Zhejiang 310051 (CN)**

(74) Representative: **Michalski Hüttermann & Partner
Patentanwälte mbB
Kaistraße 16A
40221 Düsseldorf (DE)**

(54) **BOOST MODULE CONTROL METHOD AND APPARATUS FOR VEHICLE MOTOR, AND
VEHICLE**

(57)    The present invention relates to the field of
vehicle powertrain technology, and provides a boost
module control method and apparatus for a vehicle mo-
tor, and a vehicle. The boost module control method for
the vehicle motor includes: acquiring a driving intention
parameter; and arbitrating a control mode of the boost
module according to the driving intention parameter,
where the control mode of the boost module includes a
single-voltage-loop control and a double-loop control. It is
possible to flexibly and accurately differentiate between
requirements in different operating conditions based on
the driving intention parameter, and enable the boost
module to adopt a suitable control mode, thereby achieving a balance between the stability and the rapid response and improving the overall performance of the
motor.

| Acquire a driving intention parameter | S100 |

↓

| Arbitrate a control mode of the boost module according to the driving intention parameter, where the control mode of the boost module includes a single-voltage-loop control and a double-loop control | S200 |

FIG. 2

## Description

## TECHNICAL FIELD

The present invention relates to the field of vehicle powertrain technology, and in particular, to a method and an apparatus for controlling a boost module for a motor in a vehicle, and a vehicle.

## BACKGROUND

Permanent magnet synchronous motor (PMSM) is the most commonly used drive motor for new energy vehicles, and the maximum power of the PMSM is limited by both the maximum available current and an input voltage. The maximum available current has been greatly improved due to the development of IGBT (Insulated Gate Bipolar Transistor) technology, and thus the improvement of the input voltage has become an important direction to improve the available power of the PMSM.

Among the ways to increase the input voltage, a Boost function can increase the input voltage without increasing the battery specification. At present, the control algorithm for Boost includes single-voltage-loop control, and double-loop control in which voltage loop and current loop work together. The single-voltage-loop control has simple and effective logic, but has slow response. The double-loop control has rapid response, but has a high CPU load, and is susceptible to current disturbance. It can be seen that both the single-voltage-loop control and the double-loop control have obvious limitations.

## SUMMARY

The problem to be solved by the present invention is how to improve a method of controlling a boost module for a motor in a vehicle.

In order to solve the above problem, the present invention provides a method of controlling a boost module for a motor in a vehicle, including:

acquiring a driving intention parameter; and
arbitrating a control mode of the boost module according to the driving intention parameter, where the control mode of the boost module includes a single-voltage-loop control and a double-loop control.

Optionally, the driving intention parameter includes one or more of an accelerator pedal position, a brake pedal position, a gear shift status signal, an electronic parking brake signal, an anti-slip signal, and a vehicle speed.

Optionally, arbitrating the control mode of the boost module according to the driving intention parameter, includes:
enabling the boost module to perform the single-voltage-loop control, in response to the driving intention parameter meeting a first preset condition, where the first preset condition includes at least one of:

the vehicle being in a gear shift status;
the brake pedal position being greater than 0 and less than a brake pedal position threshold for a current vehicle speed; or
the brake pedal position being 0 and the accelerator pedal position being less than an accelerator pedal position threshold for the current vehicle speed.

Optionally, arbitrating the control mode of the boost module according to the driving intention parameter, includes:
enabling the boost module to perform the double-loop control, in response to the driving intention parameter meeting a second preset condition, where the second preset condition includes at least one of:

the vehicle starting an electronic parking brake;
the vehicle starting an anti-slip control;
the brake pedal position being greater than a brake pedal position threshold for a current vehicle speed; or
the brake pedal position being 0 and the accelerator pedal position being greater than an accelerator pedal position threshold for the current vehicle speed.

Optionally, the single-voltage-loop control includes:

performing a proportional-integral (PI) operation on a difference between an input voltage and a target voltage of the boost module to obtain a PI feedforward;
performing a PI operation on a difference between an output voltage and the target voltage of the boost module to obtain a PI feedback; and
generating a target duty cycle based on the PI feedforward and the PI feedback.

Optionally, the boost module includes two boost circuits, each of which includes an inductor, and the dual-loop control includes:

performing a proportional-integral (PI) operation on an output voltage and a target voltage of the boost module to obtain initial values of current targets of two inductors in the two boost circuits;
performing a PI operation on a temperature difference between the two inductors to obtain a compensation value for the current targets of the two inductors;
generating values of the current targets of the two inductors respectively based on the initial values of the current targets and the compensation value for the current targets of the two inductors; and

obtaining target duty cycles of the two boost circuits respectively based on sampling currents of the two inductors and the values of the current targets.

Optionally, the method of controlling the boost module for the motor in the vehicle further includes:
in response to the temperature difference between the two inductors and the compensation value for the current targets of the two inductors meeting a preset state for a preset duration, reporting a fault identification, where the preset state is that the compensation value for the current targets is greater than or equal to a preset compensation threshold, and the temperature difference is greater than or equal to a preset temperature difference threshold.

Optionally, the target voltage of the boost module is generated by operations including:

generating an available power of each of one or more motors and an available power of the boost module based on an input voltage of the boost module, a temperature of an inductor in each of one or more circuits and a power limit of each motor, and sending the available power of each motor and the available power of the boost module to a vehicle controller; and receiving a target torque of each motor generated by the vehicle controller based on the available power of each motor and the available power of the boost module, generating a voltage target for each motor based on the target torque of each motor, and selecting, from voltage targets of the one or more motors, the voltage target with a maximum value as the target voltage of the boost module.

The present invention further provides an apparatus for controlling a boost module for a motor in a vehicle, including a readable storage medium and a processor, where the readable storage medium stores a computer program, which, when read and run by the processor, causes the above method of controlling the boost module for the motor in the vehicle to be implemented.

The present invention further provides a vehicle, including a readable storage medium and a processor, where the readable storage medium stores a computer program, which, when read and run by the processor, causes the above method of controlling the boost module for the motor in the vehicle to be implemented.

Compared with the related art, the present invention at least has the following technical effects.

A control mode of a boost module is arbitrated according to a driving intention parameter. The driving intention parameter, such as an accelerator pedal position, a brake pedal position, a gear shift status signal, an electronic parking brake signal, an anti-slip signal, and/or a vehicle speed, can reflect a gradient of change in a voltage target in a short period of time. When the gradient of change in the voltage target is relatively small, a current operating condition is in a smooth state, at which time, the single-voltage-loop control is adopted to pursue the stability. When the gradient of change in the voltage target is relatively large, the current operating condition requires rapid change of the motor, at which time, the double-loop control is adopted to improve the response rate. In this way, it is possible to flexibly and accurately differentiate between requirements in different operating conditions based on the driving intention parameter, and enable the boost module to adopt a suitable control mode, thereby achieving a balance between the stability and the rapid response and improving the overall performance of the motor.

**BRIEF DESCRIPTION OF DRAWINGS**

FIG. 1 is a schematic diagram illustrating an exemplary topology of a boost module according to an embodiment of the present invention.
FIG. 2 is a schematic diagram illustrating a method of controlling a boost module for a motor in a vehicle according to an embodiment of the present invention.
FIG. 3 is a control block diagram illustrating a method of controlling a boost module for a motor in a vehicle according to an embodiment of the present invention.
FIG. 4 is a schematic diagram illustrating an example of a portion of control logic for a method of controlling a boost module for a motor in a vehicle according to an embodiment of the present invention.

**DETAILED DESCRIPTION**

In order to make the above objects, features and advantages of the present invention more apparent, specific embodiments of the present invention will be described in detail below with reference to the accompanying drawings.

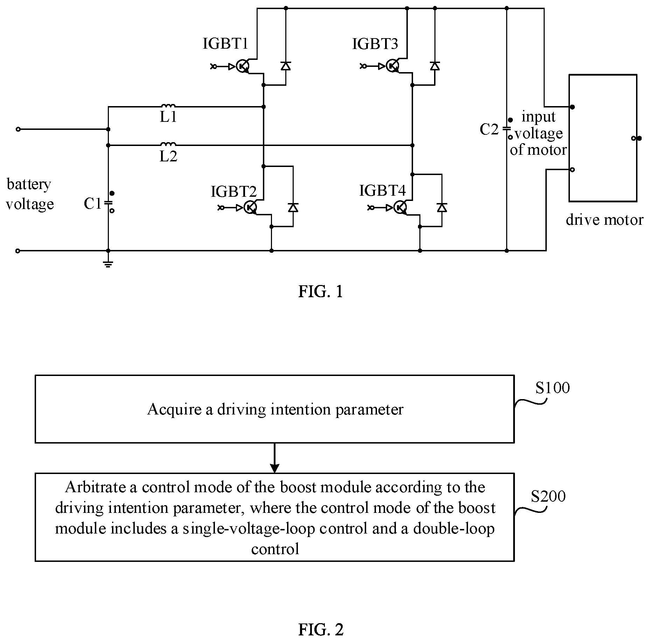

For ease of understanding, a topology of a boost module according to an embodiment of the present invention will be first introduced. As shown in FIG. 1, the boost module only has a boost function. The left side of FIG. 1 shows an input end indicated by battery voltage, and the right side of FIG. 1 shows an output end indicated by drive motor. The middle of FIG. 1 contains two full-bridge IGBTs, with an independent inductor included on each branch. The parameters are kept consistent between two inductors and four IGBTs. During control, a PCM (Powertrain Control Module) sends duty cycles of two lower-bridge IGBTs, and complementary control is performed on corresponding upper-bridge IGBTs, and a reasonable dead zone is set, so as to avoid shoot-through between the lower-bridge IGBTs and the upper-bridge IGBTs. Meanwhile, the bottom layer makes the phase difference between the duty cycles of the two IGBTs to be 180° with a phase-shifting function when executing the duty cycles of the two bridges, so as to eliminate ripples to some extent. The method of controlling the boost module for the motor in the vehicle according to the embodiment of the present invention can be applied to the above topology, but is not limited thereto.

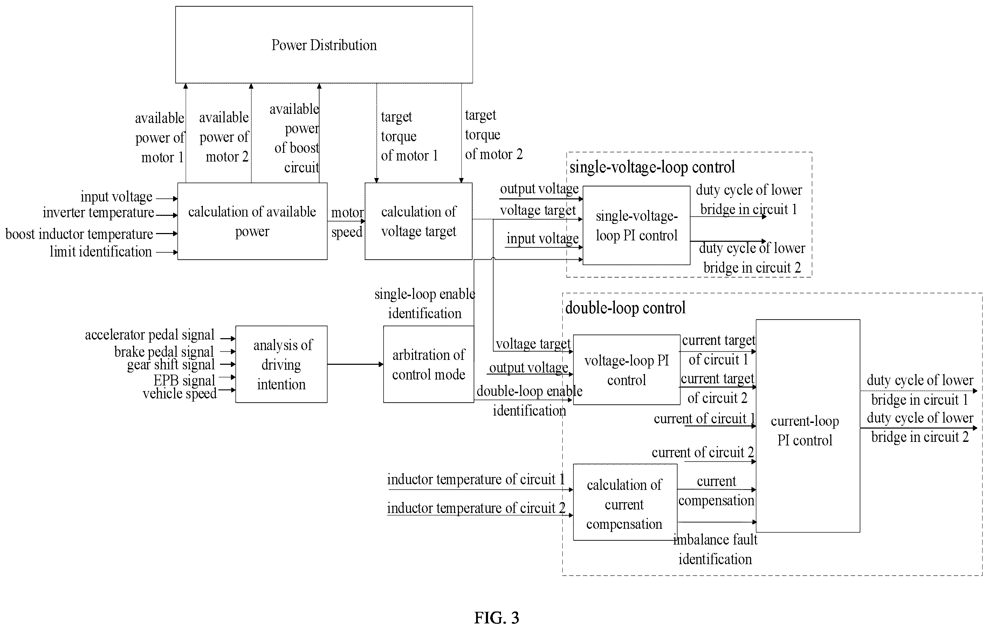

As shown in FIG. 2 and FIG. 3, in an embodiment of the present invention, the method of controlling the boost module for the motor in the vehicle includes steps S100 and S200.

At step S100, a driving intention parameter is acquired.

The driving intention parameter may include a parameter triggered by an operation of a vehicle driver, such as, for example, an accelerator pedal position parameter triggered by a vehicle driver stepping on an accelerator pedal, a brake pedal position parameter triggered by a vehicle driver stepping on a brake pedal, and a gear shift status parameter triggered by a vehicle driver performing a gear shift operation. The driving intention parameter may also include a vehicle state parameter, such as, for example, a vehicle speed, an electronic parking brake signal, and an ABS anti-slip signal. Some driving intention parameters are illustrated in FIG. 3.

In an embodiment, the driving intention parameter includes one or more of an accelerator pedal position, a brake pedal position, a gear shift status signal, an electronic parking brake signal, an anti-slip signal, and a vehicle speed. An accelerator pedal signal, a brake pedal signal, a gear shift signal, an electronic parking brake signal, and a vehicle speed signal can be acquired and analyzed to obtain a corresponding driving intention parameter. The accelerator pedal position indicates the driver's desired rate of acceleration. A relatively small accelerator pedal position indicates that the driver desires slow acceleration, and a relatively large accelerator pedal position indicates that the driver desires fast acceleration. In the case of a relatively small accelerator pedal position, the voltage target of the vehicle has a relatively small gradient of change and a relatively low rate of change, and the single-voltage-loop control can be adopted to meet the corresponding boost requirements, with a smooth operation. In the case of a relatively large accelerator pedal position, the voltage target of the vehicle has a relatively large gradient of change and a relatively high rate of change, and the dual-loop control can be adopted to better meet the requirements of rapid response. The brake pedal position is similar to the accelerator pedal position and will not be repeated. When the electronic parking brake signal is detected, a rapid response from the whole vehicle is required. At this time, the double-loop control can better meet the requirements of rapid response. The anti-slip signal is similar to the electronic parking brake signal and will not be repeated. For the vehicle speed, the single-voltage-loop control can be adopted when the vehicle speed is fast, and the double-loop control can be adopted when the vehicle speed is slow.

The driving intention parameter may include one or more of the above parameters, such as an accelerator pedal position, a brake pedal position, and a vehicle speed.

In this way, the control mode of the current boost module can be more suitable for the actual situation of the vehicle, such that the operating resources are saved while the smooth operation of the vehicle is ensured.

At step S200, the control mode of the boost module is arbitrated according to the driving intention parameter, where the control mode of the boost module includes single-voltage-loop control and double-loop control.

It is determined whether the boost module adopts the single-voltage-loop control or the double-loop control according to the driving intention parameter, where the single-voltage-loop control has simple and effective logic, but has slow response, while the double-loop control has rapid response, but has a high CPU load. The gradient of change in the voltage target is estimated according to the driving intention parameter. When the estimated gradient of change in the voltage target is small, the boost module is enabled to adopt the single-voltage-loop control to realize the stable control of the voltage. When the estimated gradient of change in the voltage target is large, the boost module is enabled to adopt the double-loop control to realize the rapid response control.

With the single-voltage-loop and double-loop switching strategy based on the driving intention parameter according to the embodiment of the invention, the control mode of the boost module is arbitrated according to the driving intention parameter, such as the vehicle speed, the accelerator pedal position, and the brake pedal position. The driving intention parameter, such as the vehicle speed, the accelerator pedal position, and the brake pedal position, can reflect the gradient of change in the voltage target. When the gradient of change in the voltage target is relatively small, a current operating condition is in a smooth state, at which time, the single-voltage-loop control is adopted to pursue the stability. When the gradient of change in the voltage target is relatively large, the current operating condition requires rapid change of the motor, at which time, the double-loop control is adopted to improve the response rate. **In** this way, it is possible to flexibly and accurately differentiate between requirements in different operating conditions based on the driving intention parameter, and enable the boost module to adopt a suitable control mode, thereby achieving a balance between the stability and the rapid response and improving the overall performance of the motor.

Optionally, step S200 includes: enabling the boost module to perform the single-voltage-loop control, in response to the driving intention parameter meeting a first preset condition, where the first preset condition includes at least one of:

    the vehicle being in a gear shift status;

the brake pedal position being greater than 0 and less than a brake pedal position threshold for a current vehicle speed; or

the brake pedal position being 0 and the accelerator pedal position being less than an accelerator pedal position threshold for the current vehicle speed.

When the vehicle is in the gear shift status, the shifting process is relatively smooth, thus the single-voltage-loop control is selected for precise and stable control.

In particular, for the case that the brake pedal position is less than a brake pedal position threshold for a current vehicle speed when the brake pedal position is greater than 0, and the case that the accelerator pedal position is less than an accelerator pedal position threshold for the current vehicle speed when the brake pedal position is 0 and the accelerator pedal position is greater than 0, the vehicle speed can be divided into multiple intervals according to the correspondence between a preset vehicle speed and a brake pedal position threshold and the correspondence between a preset vehicle speed and an accelerator pedal position threshold, and the vehicle speed in each interval has respective brake pedal position threshold and accelerator pedal position threshold. The number of the intervals is not limited. For example, in the case of three intervals, when the vehicle speed is less than 40 km/h, the corresponding brake pedal position threshold is 30%, and the corresponding accelerator pedal position threshold is 30%, when the vehicle speed is between 40 km/h and 60 km/h, the corresponding brake pedal position threshold is 50%, and the corresponding accelerator pedal position threshold is 50%, and when the vehicle speed is greater than 60 km/h, the corresponding brake pedal position threshold is 70%, and the corresponding accelerator pedal position threshold is 80%. In this case, the boost module is enabled to perform the single-voltage-loop control, when the vehicle speed is less than 40 km/h and the brake pedal position is between 0 and 30%, or when the brake pedal position is 0 and the accelerator pedal position is between 0 and 30%. The boost module is enabled to perform the single-voltage-loop control, when the vehicle speed is between 40 km/h and 60 km/h, and the brake pedal position is between 0 and 50%, or when the brake pedal position is 0 and the accelerator pedal position is between 0 and 50%. The boost module is enabled to perform the single-voltage-loop control, when the vehicle speed is greater than 60 km/h and the brake pedal position is between 0 and 70%, or when the brake pedal position is 0 and the accelerator pedal position is between 0 and 80%.

The above first preset condition involves a relatively smooth operating condition, and enabling the boost module to perform the single-voltage-loop control at this time can give full play to the stable and accurate control characteristics of the single-voltage-loop control, which is adapted to the current operating condition.

Optionally, step S200 includes: enabling the boost module to perform the double-loop control, in response to the driving intention parameter meeting a second preset condition, where the second preset condition includes at least one of:

the vehicle starting an electronic parking brake;
the vehicle starting an anti-slip control;
the brake pedal position being greater than a brake pedal position threshold for a current vehicle speed; or
the brake pedal position being 0 and the accelerator pedal position being greater than an accelerator pedal position threshold for the current vehicle speed.

In particular, for the case that the brake pedal position is greater than a brake pedal position threshold for a current vehicle speed when the brake pedal position is greater than 0, and the case that the accelerator pedal position is greater than an accelerator pedal position threshold for the current vehicle speed when the brake pedal position is 0 and the accelerator pedal position is greater than 0, the vehicle speed can be divided into multiple intervals according to the correspondence between a preset vehicle speed and a brake pedal position threshold and the correspondence between a preset vehicle speed and an accelerator pedal position threshold, and the vehicle speed in each interval has respective brake pedal position threshold and accelerator pedal position threshold. The number of the intervals is not limited. For example, in the case of three intervals, when the vehicle speed is less than 40 km/h, the corresponding brake pedal position threshold is 30%, and the corresponding accelerator pedal position threshold is 30%, when the vehicle speed is between 40 km/h and 60 km/h, the corresponding brake pedal position threshold is 50%, and the corresponding accelerator pedal position threshold is 50%, and when the vehicle speed is greater than 60 km/h, the corresponding brake pedal position threshold is 70%, and the corresponding accelerator pedal position threshold is 80%. In this case, the boost module is enabled to perform the double-loop control, when the vehicle speed is less than 40 km/h and the brake pedal position is greater than 30%, or when the brake pedal position is 0 and the accelerator pedal position is greater than 30%. The boost module is enabled to perform the double-loop control, when the vehicle speed is between 40 km/h and 60 km/h, and the brake pedal position is greater than 50%, or when the brake pedal position is 0 and the accelerator pedal position is greater than 50%. The boost module is enabled to perform the double-loop control, when the vehicle speed is greater than 60 km/h and the brake pedal position is greater than 70%, or when the brake pedal position is 0 and the accelerator pedal position is greater than 80%.

The above second preset condition requires rapid response of the motor, and enabling the boost module to perform the double-loop control at this time can give full play to the characteristics of rapid response of the double-loop control, which is adapted to the current operating condition, and can improve the overall performance of the motor.

In an embodiment, an identification indicative of a special state, such as an electronic parking brake signal or an ABS anti-slip signal is identified first. When the vehicle starts the special state such as electronic parking brake or anti-slip control, which requires the rapid response from the whole vehicle, the boost module is enabled to perform the dual-loop control. Then, it is identified whether the vehicle is in the shifting process, and the boost module is enabled to perform the single-voltage-loop control because the shifting process is relatively smooth. Then, the vehicle speed is identified, and a brake pedal position threshold and an accelerator pedal position threshold corresponding to the vehicle speed are acquired. When the brake pedal position is greater than 0 and less than the brake pedal position threshold corresponding to the current vehicle speed, or when the brake pedal position is 0 and the accelerator pedal position is less than the accelerator pedal position threshold corresponding to the current vehicle speed, the boost module is enabled to perform the single-voltage-loop control. When the brake pedal position is greater than the brake pedal position threshold corresponding to the current vehicle speed, or when the brake pedal position is 0 and the accelerator pedal position is greater than the accelerator pedal position threshold corresponding to the current vehicle speed, the boost module is enabled to perform the dual-loop control.

All of the above vehicle speed threshold, brake pedal position threshold, and accelerator pedal position threshold can be set according to actual needs, depending on the calibration results for the whole vehicle and the bench.

Optionally, the single-voltage-loop control includes:

> performing a proportional-integral (PI) operation on a difference between an input voltage and a target voltage of the boost module to obtain a PI feedforward;
> performing a PI operation on a difference between an output voltage and the target voltage of the boost module to obtain a PI feedback; and
> generating a target duty cycle based on the PI feedforward and the PI feedback.

Performing the PI operation on the difference between the input voltage and the target voltage of the boost module to obtain the PI feedforward includes: calculating a theoretical result for the current PI regulation from the target voltage and the input voltage, multiplying the theoretical result by a preset coefficient (e.g., 0.7, 0.8, or 0.9), and then importing the product as the PI feedforward into the PI control, so as to achieve the effect of improving the response accuracy. The PI feedforward $DutyPI_{Forward}$ is calculated from the following equation:

$$DutyPI_{Forward} = \frac{U_{Tar} - U_{In}}{U_{Tar}} k$$

where $U_{Tar}$ denotes the voltage target, $U_{In}$ denotes the input voltage, and $k$ denotes a preset coefficient.

After the PI feedforward and the PI feedback are obtained, the PI feedforward and the PI feedback are added together and then input into a comparator to generate a target duty cycle. The target duty cycle refers to a duty cycle used to regulate the output voltage in the boost module. For the boost module with the topology as shown in FIG. 1, the target duty cycle refers to the target duty cycle of the lower boost circuit, at which time the duty cycles of the two IGBTs are the same.

The theoretical result for the current PI regulation is calculated from the target voltage and the input voltage, and is imported into the PI control as a feedforward after being multiplied by a preset coefficient, so as to achieve the effects of improving the performance of the PI regulation and increasing the response accuracy.

Optionally, the boost module includes two boost circuits, each of which includes an inductor, and the dual-loop control includes:

> performing a proportional-integral (PI) operation on an output voltage and a target voltage of the boost module to obtain initial values of current targets of two inductors in the two boost circuits;
> performing a PI operation on a temperature difference between the two inductors to obtain a compensation value for the current targets of the two inductors;
> generating values of the current targets of the two inductors respectively based on the initial values of the current targets and the compensation value for the current targets of the two inductors; and
> obtaining target duty cycles of the two boost circuits respectively based on sampling currents of the two inductors and the values of the current targets.

The PI operation is performed on the output voltage and the target voltage of the boost module to obtain the initial values of the current targets of the two inductors, where the initial values of the current targets of the two inductors are the same, and the specific PI operation belongs to the prior art and will not be described herein.

In particular, the sum of the initial value of the current target and the compensation value for the current target of the inductor in each circuit is used as the value of the current target of the inductor, and then the PI feedforward of the current circuit is calculated by performing a PI operation on the value of the current target of the inductor in each circuit and the sampling currents of the two inductors, and the PI feedforward of the current circuit is input into the comparator to generate the corresponding target duty cycle.

For the boost module with double-bridge inductors, the limitation on the current and the temperature can be effectively improved due to the structural characteristics thereof, and the current ripple is improved by means of phase-shifting. However, due to difference in inductor parameters, difference in hardware circuits, and the like, there may be some differences in the operations of the two inductors. The same control mode is adopted for the current target in the prior art, and the lack of necessary judgment mechanism and compensation mechanism for such differences makes the two bridges have differences in damage, which reduces the service life of the hardware. According to the embodiment of the present invention, losses in different branch circuits are indirectly characterized by the temperature difference between the inductors. The temperature difference between the two inductors is imported into the PI control to obtain the compensation value for the current target, and the compensation value is added to the current targets of the two circuits, so as to balance the temperature rises of the two inductors, ensure the consistency of the service life of hardware in the two circuits, and indirectly extend the total service life of the hardware.

Further, the method of controlling the boost module for the motor in the vehicle further includes: in response to the temperature difference between the two inductors and the compensation value for the current targets of the two inductors meeting a preset state for a preset duration, reporting a fault identification, where the preset state is that the compensation value for the current targets is greater than or equal to a preset compensation threshold, and the temperature difference is greater than or equal to a preset temperature difference threshold.

Faults of the two inductor are diagnosed based on the temperature difference between the two inductors. When the compensation value for the current targets reaches the maximum but the temperature difference between the two inductors still exceeds a certain threshold and lasts for a preset duration, it is considered that the difference between the two circuits is too large and is reported as a fault, enabling the early warning of hardware damage.

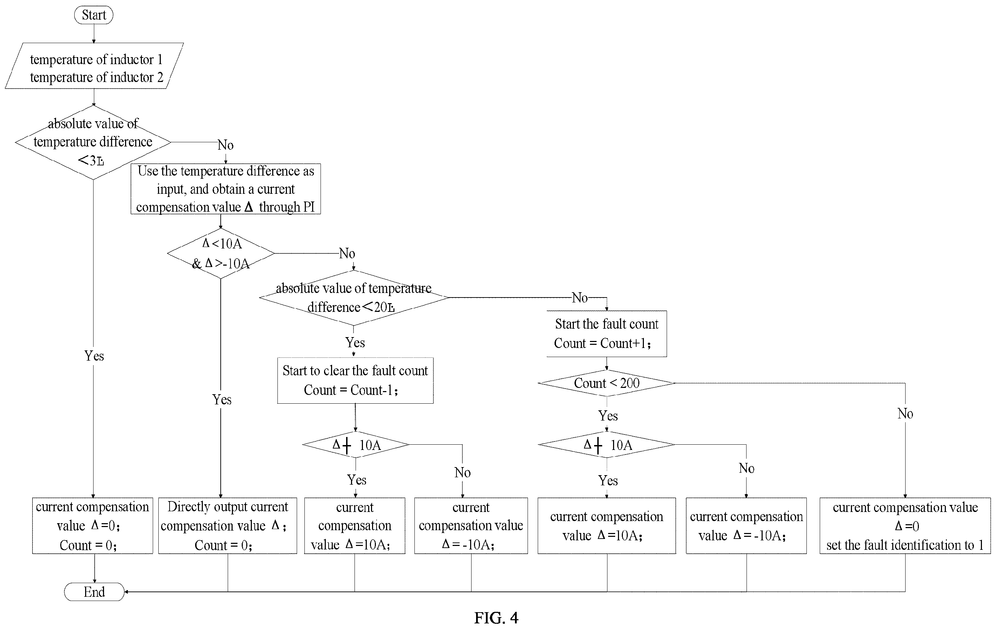

An example is given as shown in FIG. 4.

When an absolute value of a temperature difference between an inductor 1 and an inductor 2 is within 3°C, the two phases are considered to be approximately the same, the compensation value $\Delta$ is set to 0, and the count is 0.

When the absolute value of the temperature difference is greater than 3°C, the temperature difference is input into the PI to calculate the compensation value $\Delta$.

If an absolute value of the compensation value $\Delta$ output from the PI is less than 10A, the compensation value is directly output according to the polarity, for example, the compensation value is subtracted from a current target of a circuit 1, and the compensation value is added to a current target of a circuit 2, both of which are then used as the input of the current loop PI.

If the absolute value of the compensation value $\Delta$ is greater than 10A, it is determined whether the temperature difference is within 20°C.

If the temperature difference is within 20°C, the temperature is considered to be controllable, and the compensation value of 10A or -10A is output according to the polarity, and the fault count is cleared, such that the fault count is gradually reduced to 0.

If the temperature difference is greater than 20°C, the fault count starts, and the compensation value of 10A or -10A is output according to the polarity before the count is less than 200. When the count is greater than 200, the fault is triggered, and the fault identification is output while the compensation value is cleared to 0.

In the above process, the thresholds such as 3°C, 20°C and 10A can be corrected and confirmed by means of bench calibration according to the specific requirements of a project, and are not limited to specific values.

The PI algorithm above refers to the proportional-integral algorithm, which belongs to a relatively mature prior art and will not be described in detail herein.

Optionally, the target voltage of the boost module is generated by operations including:

generating an available power of each of one or more motors and an available power of the boost module based on an input voltage of the boost module, a temperature of an inductor in each of one or more circuits and a power limit of each motor, and sending the available power of each motor and the available power of the boost module to a vehicle controller; and receiving a target torque of each motor generated by the vehicle controller based on the available power of each motor and the available power of the boost module, generating a voltage target for each motor based on the target torque of each motor, and selecting, from voltage targets of the one or more motors, the voltage target with the maximum value as the target voltage of the boost module.

During calculation of the voltage target, the PCM (Powertrain Control Module) first provides the maximum available power of each motor and the maximum available power of the boost module to a VCU (Vehicle Control Unit) according to the input voltage of the boost module, the temperature of each inductor, and the power limit of each motor. The VCU distributes a torque target of each motor based on the maximum available power and the vehicle strategy, and sends the torque target of each motor to the PCM. After receiving the torque target of each motor, the PCM obtains the corresponding voltage target by looking up a table, and takes the maximum value of the voltage target as the boost target of the boost module.

The PCM understands the effect of boosting on the performance of the motor better, and thus can select the target voltage in a more reasonable manner. The VCU understands the requirements of the whole vehicle for different motors better, and can fulfil the requirements of functions strongly related to the driving conditions, such as torque distribution. The embodiment of the present invention adopts the mode in which the PCM and the VCU cooperate and collaborate with each other. The VCU reasonably distributes the power output of each motor according to the maximum available power of each motor and the maximum available power of the boost module provided by the PCM in combination with the state of the whole vehicle, taking into account the control requirements in such composite operating conditions as one motor generating power and one motor driving. This balances the power distribution by the VCU and the efficiency of the motor itself, and can match a multi-motor system more accurately, adapt to calculation of the target voltage of multi-motor in different states, and improve the application efficiency of the boost module.

In an embodiment of the present invention, an apparatus for controlling a boost module for a motor in a vehicle, which may be implemented as a motor controller or a Powertrain Control Module (PCM), includes a readable storage medium storing a computer program and a processor, where the computer program, when read and run by the processor, causes the method of controlling the boost module for the motor in the vehicle as described above to be implemented. The beneficial effects of the apparatus over the prior art are similar to those of the method of controlling the boost module for the motor in the vehicle as described above, and will not be repeated herein.

In an embodiment of the present invention, a vehicle includes a readable storage medium storing a computer program and a processor, where the computer program, when read and run by the processor, causes the method of controlling the boost module for the motor in the vehicle as described above to be implemented. The beneficial effects of the vehicle over the prior art are similar to those of the method of controlling the boost module for the motor in the vehicle as described above, and will not be repeated herein.

Although the present invention has been disclosed as above, the scope of protection of the present invention is not limited thereto. Various changes and modifications may be made by those skilled in the art without departing from the spirit and scope of the present invention, and such changes and modifications shall fall within the scope of protection of the present invention.

**Claims**

**1.** A method of controlling a boost module for a motor in a vehicle, comprising:

acquiring a driving intention parameter; and arbitrating a control mode of the boost module according to the driving intention parameter, wherein the control mode of the boost module comprises a single-voltage-loop control and a double-loop control.

**2.** The method according to claim 1, wherein the driving intention parameter comprises one or more of an accelerator pedal position, a brake pedal position, a gear shift status signal, an electronic parking brake signal, an anti-slip signal, and a vehicle speed.

**3.** The method according to claim 2, wherein arbitrating the control mode of the boost module according to the driving intention parameter, comprises:
enabling the boost module to perform the single-voltage-loop control, in response to the driving intention parameter meeting a first preset condition, wherein the first preset condition comprises at least one of:

the vehicle being in a gear shift status;
the brake pedal position being greater than 0 and less than a brake pedal position threshold for a current vehicle speed; or
the brake pedal position being 0 and the accelerator pedal position being less than an accelerator pedal position threshold for the current vehicle speed.

**4.** The method according to claim 2, wherein arbitrating the control mode of the boost module according to the driving intention parameter, comprises:
enabling the boost module to perform the double-loop control, in response to the driving intention parameter meeting a second preset condition, wherein the second preset condition comprises at least one of:

the vehicle starting an electronic parking brake;
the vehicle starting an anti-slip control;
the brake pedal position being greater than a brake pedal position threshold for a current vehicle speed; or
the brake pedal position being 0 and the accelerator pedal position being greater than an accelerator pedal position threshold for the current vehicle speed.

**5.** The method according to claim 1, wherein the single-voltage-loop control comprises:

performing a proportional-integral (PI) operation on a difference between an input voltage and a target voltage of the boost module to obtain a PI feedforward;
performing a PI operation on a difference between an output voltage and the target voltage of the boost module to obtain a PI feedback; and generating a target duty cycle based on the PI feedforward and the PI feedback.

6. The method according to claim 1, wherein the boost module comprises two boost circuits, each of which comprises an inductor, and the dual-loop control comprises:

performing a proportional-integral (PI) operation on an output voltage and a target voltage of the boost module to obtain initial values of current targets of two inductors in the two boost circuits; performing a PI operation on a temperature difference between the two inductors to obtain a compensation value for the current targets of the two inductors; generating values of the current targets of the two inductors respectively based on the initial values of the current targets and the compensation value for the current targets of the two inductors; and obtaining target duty cycles of the two boost circuits respectively based on sampling currents of the two inductors and the values of the current targets.

7. The method according to claim 6, further comprising: in response to the temperature difference between the two inductors and the compensation value for the current targets of the two inductors meeting a preset state for a preset duration, reporting a fault identification, wherein the preset state is that the compensation value for the current targets is greater than or equal to a preset compensation threshold, and the temperature difference is greater than or equal to a preset temperature difference threshold.

8. The method according to claim 1, wherein the target voltage of the boost module is generated by operations comprising:

generating an available power of each of one or more motors and an available power of the boost module based on an input voltage of the boost module, a temperature of an inductor in each of one or more circuits and a power limit of each motor, and sending the available power of each motor and the available power of the boost module to a vehicle controller; and receiving a target torque of each motor generated by the vehicle controller based on the available power of each motor and the available power of the boost module, generating a voltage target for each motor based on the target torque of each motor, and selecting, from voltage targets of the one or more motors, the voltage target with a maximum value as the target voltage of the boost module.

9. An apparatus for controlling a boost module for a motor in a vehicle, comprising a readable storage medium storing a computer program and a processor, wherein the computer program, when read and run by the processor, causes the method of controlling the boost module for the motor in the vehicle according to any one of claims 1 to 8 to be implemented.

10. A vehicle, comprising a readable storage medium storing a computer program and a processor, wherein the computer program, when read and run by the processor, causes the method of controlling the boost module for the motor in the vehicle according to any one of claims 1 to 8 to be implemented.

battery voltage

C1

L1

L2

IGBT1    IGBT3

IGBT2    IGBT4

C2    input voltage of motor

drive motor

FIG. 1

| Acquire a driving intention parameter | S100 |

↓

| Arbitrate a control mode of the boost module according to the driving intention parameter, where the control mode of the boost module includes a single-voltage-loop control and a double-loop control | S200 |

FIG. 2

FIG. 3

EP 4 611 240 A1

Start

temperature of inductor 1
temperature of inductor 2

absolute value of temperature difference <3℃ —No→

Use the temperature difference as input, and obtain a current compensation value Δ through PI

Δ<10A & Δ>-10A —No→

absolute value of temperature difference<20℃ —No→

Start the fault count
Count = Count+1;

Count < 200

Δ≠10A

Δ≠10A

Yes (left branch from absolute value of temperature difference <3℃)

Yes (from Δ<10A & Δ>-10A)

Yes (from absolute value of temperature difference<20℃)

Start to clear the fault count
Count = Count-1;

Yes (Count < 200)

Yes (Δ≠10A left)

Yes (Δ≠10A right)

No

No

No

current compensation value Δ=0;
Count = 0;

Directly output current compensation value Δ;
Count = 0;

current compensation value Δ=10A;

current compensation value Δ=-10A;

current compensation value Δ=10A;

current compensation value Δ=-10A;

current compensation value Δ=0
set the fault identification to 1

End

FIG. 4

## INTERNATIONAL SEARCH REPORT

| International application No. |
|---|
| **PCT/CN2024/077908** |

| A. | CLASSIFICATION OF SUBJECT MATTER |
|---|---|

H02M1/088(2006.01)i; B60L15/20(2006.01)i; H02M3/158(2006.01)i; H02P6/08(2016.01)i

According to International Patent Classification (IPC) or to both national classification and IPC

| B. | FIELDS SEARCHED |
|---|---|

Minimum documentation searched (classification system followed by classification symbols)

    IPC:H02M, B60L, H02P

Documentation searched other than minimum documentation to the extent that such documents are included in the fields searched

Electronic data base consulted during the international search (name of data base and, where practicable, search terms used)

    CNTXT, ENTXT, ENTXTC, WPABS, DWPI, CNKI, IEEE: 电机, 升压, 控制, 模式, 单环, 单电压环, 双环, 电压电流环, 驾驶, motor, boost, control, mode, single, double, voltage, current, ring, drive

| C. | DOCUMENTS CONSIDERED TO BE RELEVANT |
|---|---|

| Category* | Citation of document, with indication, where appropriate, of the relevant passages | Relevant to claim No. |
|---|---|---|
| PX | CN 116111815 A (ZHEJIANG GEELY AUTOMOBILE HOLDINGS LTD. et al.) 12 May 2023 (2023-05-12)<br>claims 1-10, and description, paragraphs 4-103, and figures 1-4 | 1-10 |
| Y | CN 115416493 A (FAW BESTUNE CAR CO., LTD.) 02 December 2022 (2022-12-02)<br>description, paragraphs 3-75, and figures 1-6 | 1-2, 9-10 |
| A | CN 115416493 A (FAW BESTUNE CAR CO., LTD.) 02 December 2022 (2022-12-02)<br>description, paragraphs 3-75, and figures 1-6 | 3-10 |
| Y | CN 110829850 A (CRRC YONGJI ELECTRIC CO., LTD.) 21 February 2020 (2020-02-21)<br>description, paragraphs 15, 19-20 | 1-2, 9-10 |
| Y | CN 111371314 A (HEFEI TONGZHI ELECTRICAL CONTROL TECHNOLOGY CO., LTD.) 03 July 2020 (2020-07-03)<br>description, paragraphs 5-13, and figures 1-4 | 1-2, 9-10 |
| A | US 2015311788 A1 (NANDI, S. et al.) 29 October 2015 (2015-10-29)<br>entire document | 1-10 |

| ☐ Further documents are listed in the continuation of Box C. | ☑ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **22 May 2024** | **27 May 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/077908**

| Patent document cited in search report | | | Publication date (day/month/year) | Patent family member(s) | | | Publication date (day/month/year) |
|---|---|---|---|---|---|---|---|
| CN | 116111815 | A | 12 May 2023 | None | | | |
| CN | 115416493 | A | 02 December 2022 | None | | | |
| CN | 110829850 | A | 21 February 2020 | None | | | |
| CN | 111371314 | A | 03 July 2020 | None | | | |
| US | 2015311788 | A1 | 29 October 2015 | US | 9564799 | B2 | 07 February 2017 |

Form PCT/ISA/210 (patent family annex) (July 2022)